# EUROPEAN PATENT APPLICATION

(11) **EP 2 743 075 A1**
(43) Date of publication of application: **18.06.2014**
(21) Application number: 12290434.5
(22) Date of filing: 12.12.2012
(51) Int. Cl.: B32B 5/02, B32B 13/12, B32B 13/14

(54) **Construction panel**

(71) Applicant: Saint-Gobain Placo SAS, 92282 Suresnes (FR)
(72) Inventor: The designation of the inventor has not yet been filed
(74) Representative: Pugsley, Victoria Antonietta

(57) **Abstract**

A panel for use in building construction comprises a substrate board having two opposed faces, a polymer-based lamina being provided on one of the faces of the substrate board. The polymer-based lamina is provided by a material having a fracture toughness greater than 1 MPa.m^{1/2}.

## Description

### Field of the invention

The present invention relates to panels for use in building construction and the manufacture thereof. In particular the present invention relates to panels for providing partitions to which items such as sinks, televisions, or radiators may be affixed.

### Background to the invention

Light-weight panels such as plasterboard (e.g. gypsum plasterboard), polystyrene board and fibreboard are commonly used to provide partitions within buildings. Their advantages for this application include the fact that they are light and quick to install.

However, in certain cases, such light-weight panels may have the drawback that they are not strong enough to support fixtures (e.g. sinks, televisions, radiators, fire extinguishers, shelves and any other item that requires attachment to the panel). In such cases, the weight of the fixture may cause the fixing means (e.g. screws) to be pulled out of the panel, such that the fixture falls away from the partition.

Typically, this problem has been addressed by providing plywood sheets to increase the fixing strength of the panel. In this case, the plywood sheet is provided on the side of the panel opposite to that on which the fixture is to be located. The plywood sheet may provide increased strength for retaining one or more fixing means (e.g. screws) employed to secure the fixture to the panel. Typically, the plywood sheet is positioned within the building framework, and the plasterboard then fixed to the plywood, so that it lies outside the building framework.

As an alternative, metal support means may be provided. These may comprise fixing plates, channels, straps, or metal fasteners. As is the case for plywood sheets, the metal support means are generally positioned on the side of the panel opposite that to which the fixture is to be secured, and act to receive and secure fixing means, e.g. fixing screws, that are used to attach the fixture to the panel.

Both these arrangements have the disadvantage that they require the additional supporting components to be affixed to the panel on-site. Moreover, when metal support means are used, a plurality of such support means may be needed to support the full set of fixing means required to secure the fixture to the panel. Thus, installation process may be time-consuming and expensive.

Furthermore, the addition of metal support means or plywood sheets increases the weight and thickness of the partition, and/or results in a reduction in cavity wall space. In general, the plywood itself must be cut to size on site, thus increasing the time required for installation and possibly leading to the release of dust and potentially harmful components.

Therefore, there is a need to provide improved panels that are able to retain fixing means and support fixtures, and that do not require time-consuming installation processes.

### Summary of the invention

Further to the above-defined problem, the present inventors have found that any reinforcements for the panels must be carefully selected so as to allow screw fixings to be inserted in a reliable and reproducible manner. In particular, it has been found that reinforcements should be selected so as to reduce the likelihood of overtightening of screw fixings. The term "overtightening" relates to the process by which the inner surface of a screw hole can easily be stripped by the screw if the screw is turned too far, with the result that the screw is then no longer retained in the panel.

It has been found that this problem may be reduced by selecting a reinforcement for the panel that has a fracture toughness sufficiently high to limit the sensitivity to overtightening.

Therefore, at its most general, the present invention may provide a panel that is reinforced with a backing lamina, the material of the backing lamina having a fracture toughness that is sufficiently high so as to reduce the occurrence of stripping of screw hole threads formed in the lamina.

In a first aspect, the present invention may provide a panel for use in building construction, the panel comprising a substrate board having two opposed faces, a polymer-based lamina being provided on one of the faces of the substrate board,
wherein the polymer-based lamina is provided by a material having a fracture toughness greater than 1 MPa.m^{1/2}.

Preferably, the polymer-based lamina is provided by a material having a fracture toughness greater than 1.5 MPa.m^{1/2}, more preferably greater than 2 MPa.m^{1/2}.

The lamina represents a layer that provides a discrete component of the panel, that is, it is not integrally formed with the substrate. Effectively, there is a well-defined interface or boundary between the substrate and the lamina.

Preferably, the polymer-based lamina comprises principally a thermoplastic polymer. Alternatively, the polymer-based lamina may principally comprise a thermosetting polymer.

The polymer-based lamina may be provided by a monolithic polymer, that is, a unitary, non-composite material. Alternatively, the polymer-based lamina may be provided by a composite material having a polymeric matrix, for example, a fibre-reinforced polymer. Preferably, in this case, the polymer-based lamina is reinforced by polymeric fibres. In certain cases, the fibres and matrix of the fibre-reinforced polymer are provided by the same polymer. An example of such a composite is a self-reinforced polypropylene composite in which both the fibres and the matrix consist of polypropylene, this composite being available under the trade name Curv™.

Typically, the substrate board comprises plasterboard, that is, a board comprising gypsum plaster extruded between two paper or glass fibre sheets. Alternatively, the substrate board may comprise a polystyrene, phenolic foam, polyurethane foam, or cement board, glasswool batts or fibreboard.

Typically, the polymer-based lamina is glued to the substrate board. However, in other embodiments, the polymer-based lamina may be formed from a resin that is deposited on the board and allowed to cure.

Typically, the lamina has a thickness of at least 0.25 mm, preferably at least 0.5 mm, more preferably at least 1 mm. Such thickness may provide the necessary stiffness to the lamina, such that it can improve the fixing strength of the panel.

Typically, the thickness of the lamina is less than 4 mm, preferably less than 3 mm, more preferably less than 2.5 mm. In certain cases, e.g. in the case that the polymer-based lamina is a self-reinforced composite, the thickness may be less than 2 mm. It is desirable to limit the thickness of the lamina, so that when the panel is installed to provide e.g. a wall, its footprint within the building structure is not too great. For reference, plywood reinforcements typically have a thickness of around 12 mm.

Typically, the thickness of the lamina is less than the thickness of the substrate board. Preferably, the thickness of the polymer-based lamina is less than 25% of the thickness of the substrate board, more preferably less than 20%.
A typical panel may comprise a gypsum plasterboard of 10-20 mm thickness, and may have a total thickness of approximately 11-25 mm.

Typically, the lamina is solid and non-porous. This may assist in providing the lamina with the necessary stiffness to improve the fixing strength of the panel. The phrase "solid and non-porous" is intended to exclude laminae that comprise a 3-dimensional porous array. The phrase is not intended to exclude laminae that have apertures, cut-outs, or perforations extending through the thickness of the lamina. For example, it is envisaged that the lamina may include a 2-dimensional distribution of through-thickness apertures.

In general, the polymer-based lamina is selected from the group comprising: polyvinylchloride, polycarbonate, nylon, acetal, self-reinforced polypropylene, and Bakelite™.

In general, the tensile strength at yield of the polymer-based lamina is at least 50 MPa and the modulus of elasticity in tension of the lamina is at least 2500 MPa.

In a second aspect, the present invention may provide a panel for use in building construction, the panel comprising a substrate board having two opposed faces, a fibreglass sheet being provided on one of the faces of the substrate board,
wherein the fibreglass sheet comprises a non-woven mat that is impregnated with resin.

Typically, the glass fibre content of the fibreglass sheet is greater than 25 wt%, preferably greater than 30 wt%, more preferably greater than 40 wt%.

Typically, the Young's Modulus of the resin is less than 5000 MPa, preferably less than 4500 MPa, more preferably less than 4000 MPa.

In general, the Young's Modulus of the resin is greater than 2000 MPa, preferably greater than 2500 MPa, more preferably greater than 3000 MPa.

In a third aspect, the present invention may provide a panel for use in building construction, the panel comprising a substrate board having two opposed faces, a polymer-based lamina being provided on one of the faces of the substrate board,
wherein the polymer-based lamina is configured such that when a No. 10 woodscrew is screwed into the lamina, the work done in tightening the screw, after maximum torque has been achieved is at least 7.7J.

In general, the torque required to tighten the screw within the polymer-based lamina has a peak value of at least 1.68Nm.

The work required to tighten the woodscrew is given by the area below a graph of tightening torque versus rotation angle, measured between the rotation angles of zero (corresponding to peak torque) and 7.85 radians. The value of 7.85 radians is selected because it corresponds to 1.25 turns of the screw. It has been found that when installing fixtures, the installers typically turn each screw for about one complete extra turn after peak torque has been reached. Thus, it is important to that the lamina should be configured to continue to provide resistance to screw turning (i.e. to avoid stripping of the screw thread) over this angular range.

A No. 10 woodscrew has a length of 50 mm and a diameter of 5 mm.

In a fourth aspect, the present invention may provide a panel for use in building construction, the panel comprising a substrate board having two opposed faces, a polymer-based lamina being provided on one of the faces of the substrate board,
wherein the tensile strength at yield of the polymer-based lamina is at least 50 MPa, and the modulus of elasticity in tension of the lamina is at least 2500 MPa.

### Detailed description

Certain aspects and features of the present invention will now be described by way of example, with reference to the following Figures:
Figure 1 is a schematic graph of torque against rotation angle.
Figure 2 is graph of torque against rotation angle for Example 6 and Comparative Examples 2 and 6.

### Examples 1-9

Gyproc Duraline™ gypsum boards were each provided with a lamina that was glued to a surface of the board using Aquagrip 29860 glue.

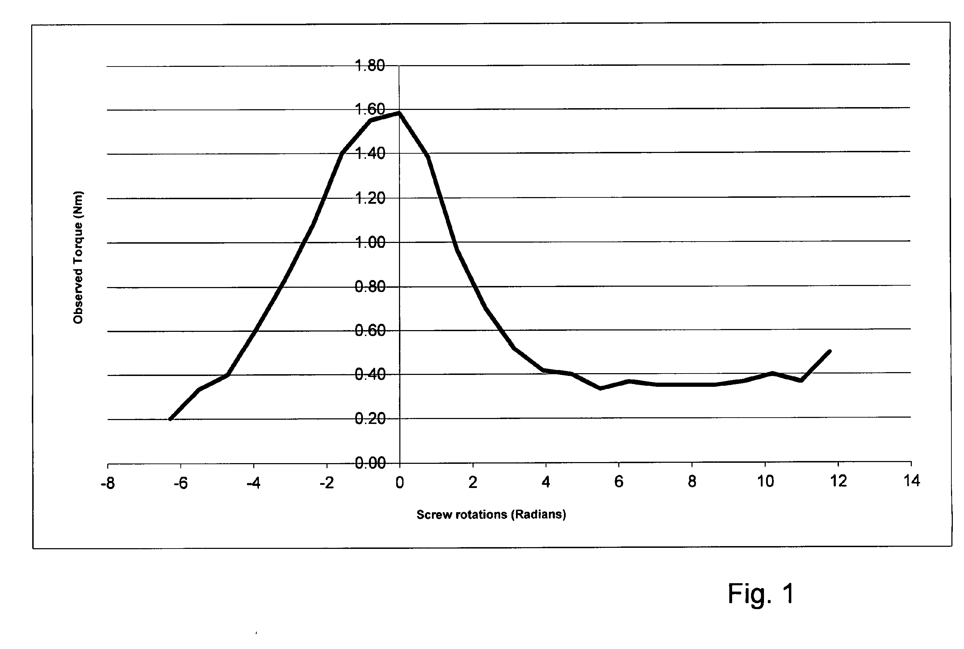

To quantify the resistance to overtightening, a graph of torque against rotation angle was plotted for a screw being inserted into a board. The screw was a No. 10 woodscrew having a length of 50 mm and a diameter of 5 mm. An example of such a graph is shown in Figure 1. The area below the curve was calculated between the rotation angles of zero (corresponding to the peak torque) and 7.85 radians.

The area gives an indication of the work done in tightening the screw after peak torque has been attained. It is thought that the greater the work done after peak torque has been attained, the lower the risk of overtightening the screw and stripping material from the inner surface of the screw hole.

The peak torque was also measured for each board. The results are set out in Table 1:

**Table 1**

| **Example** | **Lamina** | **Peak Torque (Nm)** | **Work done (J)** |
|---|---|---|---|
| Example 1 | 2mm thick PVC sheet | 2.8 | 12.1 |
| Example 2 | 2mm thick polycarbonate sheet | 2.3 | 12.4 |
| Example 3 | 2mm thick nylon sheet | 2.5 | 14.5 |
| Example 4 | 2mm thick Tufnol™ sheet | 2.7 | 14.0 |
| Example 5 | 2mm thick self-reinforced polypropylene sheet (Curv) | 2.3 | 14.8 |
| Example 6 | 1.34 mm thick self-reinforced polypropylene sheet (Curv) | 2.5 | 15.2 |
| Example 7 | 2 mm thick acetal sheet | 2.3 | 12.2 |
| Example 8 | 1.6 mm thick fibreglass sheet (Crane ETG160), having a glass fibre content of 44 wt%. | 2.3 | 9.1 |
| Example 9 | Fibreglass sheet containing non-woven glass fibre mat. Young's Modulus = 3600 MPa. Glass mat grammage = 450 g/m². Thickness = 1.1 mm. | 1.9 | 12.2 |
| Example 10 | Fibreglass sheet containing non-woven glass fibre mat. Young's Modulus = 3600 MPa. Glass mat grammage = 900 g/m². Thickness = 1.3 mm | 1.7 | 9.9 |
| Example 11 | Fibreglass sheet containing non-woven glass fibre mat. Young's Modulus = 8400 MPa. Glass mat grammage = 900 g/m². Thickness = 1.6 mm | 1.8 | 11.5 |
| Example 12 | Fibreglass sheet containing non-woven glass fibre mat. Young's Modulus = 3600 MPa. Glass mat grammage = 450 g/m². Thickness = 1.3 mm | 2.0 | 13.1 |
| Example 13 | Fibreglass sheet containing non-woven glass fibre mat. Young's Modulus = 3600 MPa. Glass mat grammage = 900 g/m². Thickness = 1.2 mm | 2.1 | 11.9 |
| Example 14 | Fibreglass sheet containing non-woven glass fibre mat. Young's Modulus = 8400 MPa. Glass mat grammage = 900 g/m². Thickness = 1.5 mm. | 1.8 | 10.2 |
| Comparative Example 1 | 12mm thick spruce plywood sheet | 2.0 | 10.4 |
| Comparative Example 2 | 1.6 mm thick fibreglass sheet (Crane FCG 180). The glass fibre content is 22 wt%. | 1.6 | 5.0 |
| Comparative Example 3 | 2 mm fibreglass sheet from Lamilux. | 2.1 | 6.2 |
| Comparative Example 4 | 2 mm fibreglass sheet from Crane | 1.7 | 7.2 |
| Comparative Example 5 | 2 mm fibreglass sheet from Renolit. | 1.7 | 6.7 |
| Comparative Example 6 | 2mm thick monolithic polypropylene sheet | 1.5 | 9.5 |
| Comparative Example 7 | Fibreglass sheet containing non-woven glass fibre mat. Young's Modulus = 8400 MPa. Glass mat grammage = 450 g/m². Thickness = 1.8 mm | 1.5 | 9.8 |
| Comparative Example 8 | Fibreglass sheet containing non-woven glass fibre mat. Young's Modulus = 8400 MPa. Glass mat grammage = 450 g/m². Thickness = 1.3 mm | 1.6 | 9.7 |

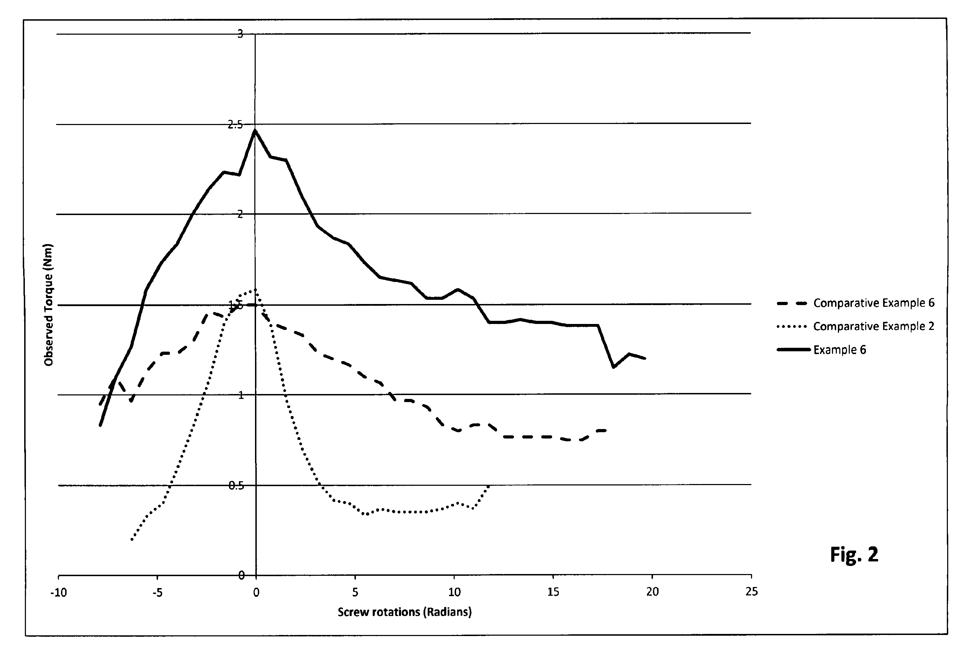

Figure 2 shows a graph of torque against rotation angle for a screw being inserted into a board according to Example 6, Comparative Example 2 and Comparative Example 6 respectively.

## Claims

1. A panel for use in building construction, the panel comprising a substrate board having two opposed faces, a polymer-based lamina being provided on one of the faces of the substrate board,
wherein the polymer-based lamina is provided by a material having a fracture toughness greater than 1 MPa.m^{1/2}.

2. A panel according to claim 1, wherein the polymer-based lamina is either a monolithic polymer or a composite having a polymer matrix.

3. A panel according to claim 2, wherein the polymer-based lamina is provided by a fibre-reinforced polymer.

4. A panel according to any one of the preceding claims, wherein the polymer-based lamina comprises principally a thermoplastic polymer.

5. A panel according to any one of claims 1-3, wherein the polymer-based lamina comprises principally a thermosetting polymer.

6. A panel according to claim 3, wherein the polymer-based lamina is reinforced by polymeric fibres.

7. A panel according to claim 6, wherein the fibres and the matrix of the fibre-reinforced polymer are provided by the same polymer.

8. A panel according to any one of the preceding claims, wherein the polymer-based lamina is solid and non-porous.

9. A panel according to any one of the preceding claims, wherein the substrate board is gypsum plasterboard.

10. A panel according to any one of the preceding claims, wherein the polymer-based lamina is glued to the substrate board.

11. A panel according to any one of the preceding claims, wherein the thickness of the polymer-based lamina is less than 20% of the thickness of the substrate board.

12. A panel according to any one of the preceding claims, wherein the thickness of the polymer-based lamina is less than 5mm.

13. A panel according to claim 1, wherein the polymer-based lamina is selected from the group comprising: polyvinylchloride, polycarbonate, nylon, acetal, self-reinforced polypropylene, and Bakelite.

14. A panel according to any one of the preceding claims, wherein the tensile strength at yield of the polymer-based lamina is at least 50 MPa, and the modulus of elasticity in tension of the lamina is at least 2500 MPa.

15. A panel for use in building construction, the panel comprising a substrate board having two opposed faces, a fibreglass sheet being provided on one of the faces of the substrate board,
wherein the fibreglass sheet comprises a non-woven mat that is impregnated with resin.

16. A panel according to claim 15, wherein the glass fibre content of the fibreglass sheet is greater than 25 wt%.

17. A panel according to claim 15 or claim 16, wherein the Young's Modulus of the resin is less than 5000 MPa.

18. A panel for use in building construction, the panel comprising a substrate board having two opposed faces, a polymer-based lamina being provided on one of the faces of the substrate board,
wherein the polymer-based lamina is configured such that, when a No. 10 woodscrew is screwed into the lamina, the work done in tightening the screw after maximum torque has been achieved is at least 7.7J.

19. A panel according to claim 18, wherein the torque required to tighten the screw within the polymer-based lamina has a peak value of at least 1.68Nm.

20. A panel for use in building construction, the panel comprising a substrate board having two opposed faces, a polymer-based lamina being provided on one of the faces of the substrate board,
wherein the tensile strength at yield of the polymer-based lamina is at least 50 MPa, and the modulus of elasticity in tension of the lamina is at least 2500 MPa.
